# EUROPÄISCHE PATENTSCHRIFT

(11) **EP 1 529 621 B1**
(45) Veröffentlichungstag und Bekanntmachung des Hinweises auf die Patenterteilung: **01.08.2012**
(21) Anmeldenummer: 04450199.7
(22) Anmeldetag: 29.10.2004
(51) Int. Cl.: B29C 49/68, B29C 49/78, B29C 49/64

(54) **Verfahren und Vorrichtung zum Erwärmen von Vorformlingen**
Method and apparatus for heating of preforms
Procédé et appareil pour le chauffage de préformes

(30) Priorität: 07.11.2003 AT 17882003
(43) Veröffentlichungstag der Anmeldung: 11.05.2005
(73) Patentinhaber: KOSME Gesellschaft mbH, 2601 Sollenau (AT)
(72) Erfinder: Hofstätter, Wilhelm, 2700 Wiener Neustadt (AT); Nastevski, Jovan, 29389 Bad Bodenteich (DE)
(74) Vertreter: Miksovsky, Alexander

(56) Entgegenhaltungen:
- DE-U- 20 005 210
- US-A- 4 923 395
- US-A- 5 688 466
- US-A- 6 005 223

## Beschreibung

Die vorliegende Erfindung bezieht sich auf ein Verfahren zum Erwärmen von von rohrförmigen, thermoplastischen Vorformlingen zur Herstellung von PET-Behältern bzw. -Flaschen gebildeten Hohlkörpern, wobei die Vorformlinge zu einer Rotationsbewegung um ihre Längsachse angetrieben werden und entlang einer Mehrzahl von Heizeinrichtungen bewegt werden, sowie auf eine Vorrichtung zum Erwärmen von von rohrförmigen, thermoplastischen Vorformlingen zur Herstellung von PET-Behältern bzw. -Flaschen gebildeten Hohlkörpern, wobei die Vorrichtung eine Mehrzahl von im wesentlichen über einander angeordneten Heizeinrichtungen umfaßt, entlang welcher die zu erwärmenden Vorformlinge unter gleichzeitiger Durchführung einer Rotationsbewegung um eine Längsachse der Vorformlinge bewegbar sind.

Bei der Herstellung von Hohlkörpern aus rohrförmigen, thermoplastischen Vorformlingen, insbesondere bei der Herstellung von PET-Behältern bzw. -Flaschen, werden relativ dickwandige Vorformlinge eingesetzt. Diese werden üblicherweise erwärmt und durch anschließende mechanische, insbesondere biaxiale, Verformung bzw. Verstreckung in einer Form in einer sogenannten Blas- bzw. Streckblasvorrichtung auf das Maß des fertigen Behälters bzw. der fertigen Flasche verformt. Dabei wird das Material des Vorformlings, beispielsweise unter Verwendung eines Reckdornes sowie unter gleichzeitiger Einführung eines Gases unter Druck in die erwärmten Vorformlinge, so gedehnt, daß die Umfangs- bzw. Mantelfläche des herzustellenden Hohlkörpers eine relativ dünne Wandstärke erreicht, die in einer kalten bzw. gekühlten Form einfriert und wobei der Behälter bzw. Hohlkörper seine Form beibehält, ohne sie nachträglich nach dem Abkühlvorgang entscheidend zu verändern.

Eine derartige Blas- bzw. Streckblasvorrichtung ist beispielsweise der AT-U 520 oder der AT-U 5076 zu entnehmen, wobei die Vorformlinge in einer Transportvorrichtung beispielsweise über lösbar am Außenumfang der Vorformlinge angreifende Klemmelemente unter anderem durch eine Vorrichtung zum Erwärmen der Hohlkörper bzw. Vorformlinge geführt werden.

Aus der US-5 4 688 466 sind ein Verfahren und eine Vorrichtung zum Ausrichten bzw. Anordnen von Heizlampen einer Blas- bzw. Streckblasvorrichtung zu entnehmen, wobei auf eine Verlagerung der Heizlampen relativ zueinander insbesondere im Inneren der Heizeinrichtung abgezielt wird, um eine Verstellung von Lampen während des Betriebs durch unbefugte Personen zu verhindern.

Im Zusammenhang mit einem ordnungsgemäßen Erwärmen derartiger Vorformlinge, welches für das nachfolgende Blasformen unter anderem angepaßt an die Form und das Material des Vorformlings vorzunehmen ist, muß bei einem Wechsel der Vorformlinge zur Herstellung von abgewandelten Hohlkörpern, insbesondere PET-Behältern bzw. -Flaschen, auch eine Neujustierung der Heizeinrichtungen vorgenommen werden, um die für das nachfolgende Blasformen erforderliche, ordnungsgemäße Erwärmung der Vorformlinge vorzunehmen, welche gegebenenfalls in unterschiedlichen Teilbereichen der Vorformlinge entsprechend der herzustellenden Blasform unterschiedlich sein kann. Eine derartige Einstellung der Heizeinrichtungen muß hiebei insbesondere in Anpassung an die Außenkontur der zu erwärmenden Vorformlinge erfolgen, wobei darüber hinaus gegebenenfalls durch eine Steuerung der Leistung unterschiedlicher Heizeinrichtungen ein gezieltes Erwärmen vorgenommen werden kann.

Die vorliegende Erfindung zielt darauf ab, ein Verfahren und eine Vorrichtung der eingangs genannten Art dahingehend zu verbessern bzw. weiter zu entwickeln, daß eine Anpassung an unterschiedliche, zu erwärmende Hohlkörper, insbesondere an unterschiedliche Vorformlinge, mit verringertem Zeit- und Arbeitsaufwand und gegebenenfalls weitestgehend automatisiert erfolgen kann.

Zur Lösung dieser Aufgaben ist ein Verfahren der eingangs genannten Art im wesentlichen dadurch gekennzeichnet, daß die Außenkontur eines zu erwärmenden Vorformlings durch Abtasteinrichtungen abgetastet wird und die Heizeinrichtungen entsprechend der abgetasteten Außenkontur durch ein Koppeln mit den Abtasteinrichtungen verstellt werden. Dadurch, daß erfindungsgemäß durch Abtasteinrichtungen die Außenkontur eines zu erwärmenden Vorformlings abgetastet wird und entsprechend der abgetasteten Außenkontur über ein Koppeln mit den Abtasteinrichtungen die Heizeinrichtungen verstellt werden, gelingt in einfacher Weise eine Verstellung in Anpassung an eine geänderte Außenkontur eines Vorformlings. Es wird somit mit dem erfindungsgemäßen Verfahren in einfacher Weise möglich, rasch und zuverlässig eine Anpassung an eine geänderte Außenkontur eines zu erwärmenden Hohlkörpers, insbesondere Vorformlings, vorzunehmen.

Gemäß einer bevorzugten Ausführungsform wird vorgeschlagen, daß in Teilbereichen der Heizeinrichtungen, an welchen eine Bewegung der zu erwärmenden Vorformlinge nicht vorgesehen ist, die Heizeinrichtungen in eine Ruheposition verschoben werden. Durch ein derartiges Verschieben bzw. Zurückziehen in eine Ruheposition von nicht benötigten Heizeinrichtungen kann eine weiter verbesserte Anpassung an eine Außenkontur eines zu erwärmenden Vorformlings vorgenommen werden.

Um eine gleichmäßige Erwärmung der Vorformlinge zu erzielen, werden diese üblicherweise zu einer Rotationsbewegung um ihre Längsachse bei einem Durchtritt durch die Heizeinrichtungen angetrieben bzw. drehend geführt, so daß Heizeinrichtungen üblicherweise lediglich an einer Seite des Transportwegs der Vorformlinge bzw. zu erwärmenden Hohlkörper vorgesehen sind. Zur besseren Ausnutzung der von den Heizeinrichtungen abgegebenen Strahlungsenergie sowie um eine gleichmäßigere Erwärmung der Hohlkörper bzw. Vorformlinge zu erzielen, wird gemäß einer weiters bevorzugten Ausführungsform vorgeschlagen, daß den Heizeinrichtungen gegenüberliegende Reflektoreinrichtungen ebenfalls in Anpassung an die Außenkontur der zu erwärmenden Vorformlinge verstellt werden, wobei gemäß einer bevorzugten Ausführungsform vorgesehen ist, daß die Reflektoreinrichtungen in Anpassung an die Längserstreckung der Vorformlinge verstellt werden. Durch eine Verstellbarkeit der Reflektoreinrichtungen kann ebenfalls in einfacher und zuverlässiger Weise eine Anpassung an unterschiedliche Abmessungen bzw. Außenkonturen eines Vorformlings vorgenommen werden.

Zur Lösung der eingangs genannten Aufgaben ist eine Vorrichtung der eingangs genannten Art im wesentlichen dadurch gekennzeichnet, daß Abtasteinrichtungen zur Feststellung der Außenkontur eines zu erwärmenden Vorformlings vorgesehen sind und daß die Abtasteinrichtungen mit den Heizeinrichtungen zur Verstellung der Lage der Heizeinrichtungen gekoppelt bzw. koppelbar sind. Wie oben bereits angeführt, gelingt durch die Abtasteinrichtungen eine einfache und zuverlässige Feststellung der Außenkontur eines zu erwärmenden Vorformlings, wobei die Heizeinrichtungen mit den Abtasteinrichtungen für eine Verstellung der Heizeinrichtungen in Anpassung an die Außenkontur eines zu erwärmenden Vorformlings gekoppelt bzw. koppelbar sind.

Für eine besonders einfache und zuverlässige Justierung der Heizeinrichtungen wird gemäß einer weiters bevorzugten Ausführungsform vorgeschlagen, daß die Abtasteinrichtungen von bügelartigen Elementen gebildet sind, welche in Anlage an einen in einer Aufnahmeöffnung aufnehmbaren Vorformling bringbar sind und daß die bügelartigen Elemente über mechanische Kopplungseinrichtungen mit den Heizeinrichtungen gekoppelt sind. Derartige bügelartige Elemente können in einfacher Weise und unter Einhaltung von gegebenenfalls erforderlichen, geringen, gegenseitigen Abständen entlang der Längserstreckung eines zu erwärmenden Hohlkörpers, insbesondere Vorformlings, vorgesehen sein, so daß die Positionierung der üblicherweise vorgesehenen Vielzahl von im wesentlichen übereinander angeordneten Heizeinrichtungen entsprechend an die Außenkontur eines zu erwärmenden Vorformlings bzw. Hohlkörpers angepaßt werden kann.

Für eine weitere Automatisierung und Vereinfachung der Anpassung an unterschiedliche Außenkonturen wird gemäß einer weiters bevorzugten Ausführungsform vorgeschlagen, daß die bügelartigen Elemente automatisch verstellbar sind, wobei eine derartige Verstellung insbesondere durch einen Motor erfolgen kann.

Wie oben bereits angeführt, kann zur Energieeinsparung darüber hinaus gemäß einer weiters bevorzugten Ausführungsform vorgesehen sein, daß die Heizeinrichtungen in Teilbereichen der Vorrichtung, in welchen eine Bewegung der zu erwärmenden Vorformlinge nicht vorgesehen ist, in eine Ruhelage verstellbar sind.

Zur Vergleichmäßigung der Erwärmung der zu erwärmenden Hohlkörper während ihrer Bewegung durch die mit Heizeinrichtungen versehene Vorrichtung wird gemäß einer weiters bevorzugten Ausführungsform vorgeschlagen, daß die Vorrichtung in an sich bekannter Weise relativ zur Bewegungsbahn der Vorformlinge den Heizeinrichtungen gegenüberliegend mit Reflektoreinrichtungen versehen ist. Für eine optimierte Energieausnutzung sowie auch eine zuverlässige Erwärmung insbesondere des der Öffnung eines Vorformlings abgewandten Bodenbereichs wird darüber hinaus bevorzugt vorgesehen, daß die Reflektoreinrichtungen in dem Endbereich der zu erwärmenden Vorformlinge mit in Richtung zu den Heizeinrichtungen abgeschrägten Teilbereichen versehen sind.

Zur weiteren Vergleichmäßigung der Erwärmung, insbesondere in Anpassung an die Außenform bzw. die Außenkontur eines zu erwärmenden Vorformlings kann darüber hinaus vorgesehen sein, daß die Reflektoreinrichtungen verstellbar sind, wie dies einer weiters bevorzugten Ausführungsform der erfindungsgemäßen Vorrichtung entspricht, wobei gemäß einer besonders bevorzugten Ausführungsform vorgeschlagen wird, daß die Reflektoreinrichtungen entlang der Längsachse der zu erwärmenden Vorformlinge höhenverstellbar sind.

In Anpassung an in unterschiedlichen Positionen der Längserstreckung eines zu erwärmenden Hohlkörpers bzw. Vorformlings gegebenenfalls erforderliche, unterschiedliche Heizleistungen wird gemäß einer weiters bevorzugten Ausführungsform vorgeschlagen, daß die Heizeinrichtungen getrennt mit Energie versorgbar sind.

Die Erfindung wird nachfolgend anhand eines in der beiliegenden Zeichnung schematisch dargestellten Ausführungsbeispiels näher erläutert. In dieser zeigen:
Fig. 1 eine schematische, perspektivische Ansicht einer Mehrzahl von Vorrichtungen zum Erwärmen von von Vorformlingen gebildeten Hohlkörpern zur Herstellung von PET-Behältern bzw. -Flaschen zur Durchführung des erfindungsgemäßen Verfahrens; und
Fig. 2 einen Teilschnitt durch eine erfindungsgemäße Vorrichtung entsprechend der Linie II-II der Fig.

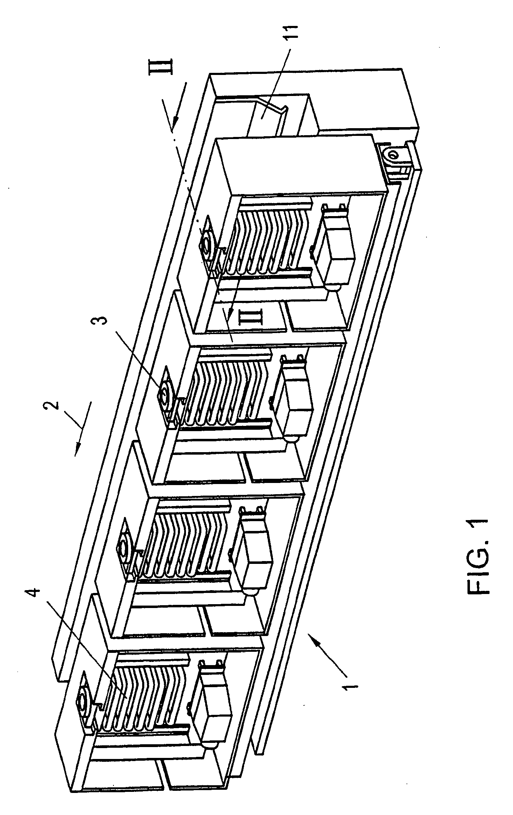

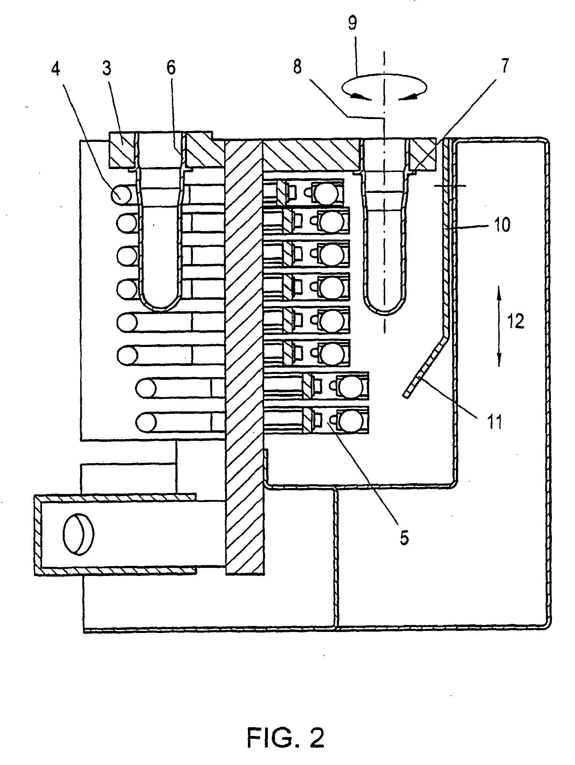

In Fig. 1 ist eine Mehrzahl von allgemein mit 1 bezeichneten Vorrichtungen als Heizmodule nebeneinander entlang eines Transportwegs zum Erwärmen von nicht näher dargestellten Hohlkörpern, insbesondere Vorformlingen, zur Herstellung von PET-Behältern bzw. -Flaschen dargestellt. Die Vorformlinge werden entlang einer schematisch mit 2 angedeuteten Bewegungsrichtung durch die Heizeinrichtungen bzw. Heizmodule 1 bewegt, wobei die Heizmodule an ihrer Außenseite jeweils eine mit 3 bezeichnete Aufnahmeöffnung für eine Abtastung bzw. Ermittlung der Außenkontur eines zu erwärmenden Vorformling aufweisen, wie dies im Detail in Fig. 2 näher dargestellt wird. Weiters ist ersichtlich, daß im Bereich der Aufnahmeöffnung 3 eine Mehrzahl von übereinander angeordneten, bügelartigen Elementen 4 vorgesehen ist, welche Abtasteinrichtungen zur Ermittlung der Außenkontur eines in die Aufnahmeöffnung 3 einzusetzenden Vorformlings bzw. zu erwärmenden Hohlkörpers darstellen.

Die Abtasteinrichtungen bzw. bügelartigen Elemente 4 sind, wie dies in Fig. 2 deutlicher dargestellt ist, unmittelbar mit Heizeinrichtungen 5 gekoppelt, welche beispielsweise von entsprechenden Heizlampen gebildet sind, so daß durch eine Bewegung der zu erwärmenden Hohlkörper bzw. Vorformlinge entlang der Heizmodule bzw. Heizvorrichtungen 1 diese Vorformlinge erwärmt werden, welche in weiterer Folge im Rahmen der Herstellung von PET-Behältern bzw. -Flaschen in einer Blasformeinrichtung zur Erzielung einer gewünschten Form in Streckblasformen unter Druck aufgeweitet werden, um eine entsprechend dünne Wandstärke zu erreichen.

In Fig. 2 ist deutlich ersichtlich, daß in die Aufnahmeöffnung 3 ein zu erwärmender Hohlkörper bzw. Vorformling 6 eingesetzt ist, wobei die bügelartigen Elemente 4 im wesentlichen in Anlage an die Außenkontur des Vorformlings 6 gebracht werden, so daß die mit den bügelartigen Elementen 4 gekoppelten Heizeinrichtungen 5 ebenfalls an die Außenkontur eines zu erwärmenden Vorformlings gebracht werden.

Ein derartiger, durch die Heizeinrichtungen 5 zu erwärmender Vorformling ist in Fig. 2 mit 7 bezeichnet, wobei darüber hinaus angedeutet ist, daß der Vorformling 7 während seiner Bewegung entlang der Heizeinrichtungen 5 um seine Längsachse 8 zu einer Rotationsbewegung entsprechend dem Pfeil 9 angetrieben wird.

Heizeinrichtungen 5 außerhalb der Außenkontur eines zu erwärmenden Vorformlings 6 bzw. 7 können in eine Ruheposition gebracht werden, wo sie beispielsweise nicht mit Energie versorgt werden. In der in Fig. 2 dargestellten Ausführungsform ist eine Ruheposition in einer im wesentlichen in eine mittige Lage eingeschobenen Position angedeutet, so daß zuverlässig auch der Bodenbereich des zu erwärmenden Vorformlings 7 erwärmt wird. Alternativ können die Heizeinrichtungen 5 in eine Ruheposition zurückgezogen werden.

In Fig. 2 ist darüber hinaus deutlicher dargestellt, daß den Heizeinrichtungen 5 gegenüberliegende Reflektoreinrichtungen 10 vorgesehen sind, wobei die Reflektoreinrichtung 10 an ihrem dem Bodenbereich eines zu erwärmenden Vorformlings 7 zugewandten Ende 11 abgeschrägt ist, um eine zuverlässige Bündelung der Energie, insbesondere im Bodenbereich des zu erwärmenden Vorformlings 7, zu ermöglichen. In Anpassung an die Außenkontur und insbesondere die Längserstreckung eines Vorformlings 7 ist darüber hinaus vorgesehen, daß auch die Reflektoreinrichtung 10 verstellbar ist, wie dies durch den Doppelpfeil 12 in Fig. 2 angedeutet ist, so daß insbesondere durch die Verstellung des abgeschrägten Endbereichs 11 eine Anpassung an die Längserstreckung eines zu erwärmenden Vorformlings 7 ermöglicht wird.

Zur Anpassung der in unterschiedlichen Höhenbereichen einzubringenden Wärme- bzw. Heizenergie auf den Vorformling 7 kann darüber hinaus vorgesehen sein, daß die einzelnen, im wesentlichen übereinander angeordneten Heizeinrichtungen 5 getrennt mit Energie versorgbar sind. Weiters kann vorgesehen sein, daß die bei der Darstellung gemäß Fig. 1 nacheinander entlang der Bewegungsrichtung 2 angeordneten Heizeinrichtungen bzw. Heizmodule 1 unterschiedlich mit Energie versorgt werden, um unterschiedliche Temperaturbereiche zur Erwärmung der Vorformling 7 zur Verfügung zu stellen.

Zur weiteren Automatisierung einer Anpassung an die Außenform eines zu erwärmenden Vorformlings 7 kann darüber hinaus vorgesehen sein, daß die Bügelelemente 4 durch einen Motorantrieb entsprechend der Form eines in die Aufnahmeöffnung 3 eingesetzten Vorformlings 6 verschoben werden, so daß ebenfalls automatisch eine Verstellung der Heizeinrichtungen 5 erfolgt.

## Patentansprüche

1. Verfahren zum Erwärmen von von rohrförmigen, thermoplastischen Vorformlingen zur Herstellung von PET-Behältern bzw. -Flaschen gebildeten Hohlkörpern (6, 7), wobei die Vorformlinge (6, 7) zu einer Rotationsbewegung um ihre Längsachse (8) angetrieben werden und entlang einer Mehrzahl von Heizeinrichtungen (5) bewegt werden, **dadurch gekennzeichnet, daß** die Außenkontur eines zu erwärmenden Vorformlings (6, 7) durch Abtasteinrichtungen (4) abgetastet wird und die Heizeinrichtungen (5) entsprechend der abgetasteten Außenkontur durch ein Koppeln mit den Abtasteinrichtungen verstellt werden.

2. Verfahren nach Anspruch 1, **dadurch gekennzeichnet, daß** in Teilbereichen der Heizeinrichtungen (5), an welchen eine Bewegung der zu erwärmenden Vorformlinge (6, 7) nicht vorgesehen ist, die Heizeinrichtungen (5) in eine Ruheposition verschoben werden.

3. Verfahren nach Anspruch 1 oder 2, **dadurch gekennzeichnet, daß** den Heizeinrichtungen (5) gegenüberliegende Reflektoreinrichtungen (10) ebenfalls in Anpassung an die Außenkontur der zu erwärmenden Vorformlinge (6, 7) verstellt werden.

4. Verfahren nach Anspruch 3, **dadurch gekennzeichnet, daß** die Reflektoreinrichtungen (10) in Anpassung an die Längserstreckung der Vorformlinge (6, 7) verstellt werden.

5. Vorrichtung zum Erwärmen von von rohrförmigen, thermoplastischen Vorformlingen zur Herstellung von PET-Behältern bzw. -Flaschen gebildeten Hohlkörpern (6, 7), wobei die Vorrichtung eine Mehrzahl von im wesentlichen über einander angeordneten Heizeinrichtungen (5) umfaßt, entlang welcher die zu erwärmenden Vorformlinge (6, 7) unter gleichzeitiger Durchführung einer Rotationsbewegung (9) um eine Längsachse (8) der Vorformlinge (6, 7) bewegbar sind, **dadurch gekennzeichnet, daß** Abtasteinrichtungen (4) zur Feststellung der Außenkontur eines zu erwärmenden Vorformlings (6, 7) vorgesehen sind und daß die Abtasteinrichtungen (4) mit den Heizeinrichtungen (5) zur Verstellung der Lage der Heizeinrichtungen (5) gekoppelt bzw. koppelbar sind.

6. Vorrichtung nach Anspruch 5, **dadurch gekennzeichnet, daß** die Abtasteinrichtungen von bügelartigen Elementen (4) gebildet sind, welche in Anlage an einen in einer Aufnahmeöffnung (3) aufnehmbaren Vorformling (6) bringbar sind und daß die bügelartigen Elemente (4) über mechanische Kopplungseinrichtungen mit den Heizeinrichtungen (5) gekoppelt sind.

7. Vorrichtung nach Anspruch 6, **dadurch gekennzeichnet, daß** die bügelartigen Elemente (4) automatisch verstellbar sind.

8. Vorrichtung nach einem der Ansprüche 5 bis 7, **dadurch gekennzeichnet, daß** die Heizeinrichtungen (5) in Teilbereichen der Vorrichtung, in welchen eine Bewegung der zu erwärmenden Vorformlinge nicht vorgesehen ist, in eine Ruhelage verstellbar sind.

9. Vorrichtung nach einem der Ansprüche 5 bis 8, **dadurch gekennzeichnet, daß** die Vorrichtung in an sich bekannter Weise relativ zur Bewegungsbahn (2) der Vorformlinge (7) den Heizeinrichtungen (5) gegenüberliegend mit Reflektoreinrichtungen (10) versehen ist.

10. Vorrichtung nach Anspruch 9, **dadurch gekennzeichnet, daß** die Reflektoreinrichtungen (10) in dem Endbereich (11) der zu erwärmenden Vorformlinge (7) mit in Richtung zu den Heizeinrichtungen (5) abgeschrägten Teilbereichen versehen sind.

11. Vorrichtung nach Anspruch 9 oder 10, **dadurch gekennzeichnet, daß** die Reflektoreinrichtungen (10) verstellbar sind.

12. Vorrichtung nach Anspruch 11, **dadurch gekennzeichnet, daß** die Reflektoreinrichtungen (10) entlang der Längsachse (8) der zu erwärmenden Vorformlinge (7) höhenverstellbar sind.

13. Vorrichtung nach einem der Ansprüche 5 bis 12, **dadurch gekennzeichnet, daß** die Heizeinrichtungen (5) getrennt mit Energie versorgbar sind.

## Claims

1. A method for heating hollow bodies (6, 7) formed by tubular, thermoplastic preforms for the production of PET containers or bottles, wherein said preforms (6, 7) are driven to a rotational movement about their longitudinal axes (8) and moved along a plurality of heating means (5), **characterized in that** the outer contour of a preform (6, 7) to be heated is scanned by scanning means (4) and the heating means (5) are adjusted according to the scanned outer contour by being coupled to the scanning means.

2. A method according to claim 1, **characterized in that** the heating means (5) are displaced into idle positions in subregions of the heating means (5) in which no movement of the preforms (6, 7) to be heated is provided.

3. A method according to claim 1 or 2, **characterized in that** reflector means (10) located opposite the heating means (5) are also adjusted in adaptation to the outer contours of the preforms (6, 7) to be heated.

4. A method according to claim 3, **characterized in that** the reflector means (10) are adjusted in adaptation to the longitudinal extensions of the preforms (6, 7).

5. A device for heating hollow bodies (6, 7) formed by tubular, thermoplastic preforms for the production of PET containers or bottles, said device including a plurality of substantially superimposed heating means (5), along which the preforms (6, 7) to be heated are movable while, at the same time, performing rotational movements (9) about longitudinal axes (8) of the preforms (6, 7), **characterized in that** scanning means (4) for detecting the outer contour of a preform (6, 7) to be heated are provided, and that the scanning means (4) are coupled or coupleable to the heating means (5) for adjusting the positions of the heating means (5).

6. A device according to claim 5, **characterized in that** the scanning means are comprised of yoke-shaped elements (4) capable of being brought into abutment on a preform (6), which can be received in a receiving opening (3), and that the yoke-shaped elements (4) are coupled to the heating means (5) by mechanical coupling means.

7. A device according to claim 6, **characterized in that** the yoke-shaped elements (4) are automatically adjustable.

8. A device according to any one of claims 5 to 7, **characterized in that** the heating means (5) are adjustable into idle positions in subregions of the device in which no movement of the preforms to be heated is provided.

9. A device according to any one of claims 5 to 8, **characterized in that** the device, in a manner known per se, is provided with reflector means (10) in opposite fashion to the heating means (5) relative to the path of movement (2) of the preforms (7).

10. A device according to claim 9, **characterized in that** the reflector means (10) in the end regions (11) of the preforms (7) to be heated are provided with portions slanted towards the heating means (5).

11. A device according to claim 9 or 10, **characterized in that** the reflector means (10) are adjustable.

12. A device according to claim 11, **characterized in that** the reflector means (10) are vertically adjustable along the longitudinal axes (8) of the preforms (7) to be heated.

13. A device according to any one of claims 5 to 12, **characterized in that** the heating means (5) can be separately powered.

## Revendications

1. Procédé pour le chauffage de préformes thermoplastiques de forme tubulaire pour la fabrication de corps creux (6, 7) formés par des récipients en PET ou des bouteilles en PET, sachant que les préformes (6, 7) sont entraînées pour effectuer un mouvement de rotation autour de leur axe longitudinal (8) et sont déplacées le long d'une pluralité de systèmes de chauffage (5), **caractérisé en ce que** le contour extérieur d'une préforme (6, 7) à chauffer est balayé par des systèmes détecteurs (4), et que les systèmes de chauffage (5) sont ajustés avec les systèmes détecteurs par couplage suivant le contour extérieur balayé.

2. Procédé selon la revendication 1, **caractérisé en ce que** les systèmes de chauffage (5) sont poussés dans une position de repos dans des zones partielles des systèmes de chauffage (5), sur lesquelles un mouvement des préformes (6, 7) à chauffer n'est pas prévu.

3. Procédé selon la revendication 1 ou 2, **caractérisé en ce que** des systèmes réflecteurs (10) faisant face aux systèmes de chauffage (5) sont ajustés également de manière à s'adapter au contour extérieur des préformes (6, 7) à chauffer.

4. Procédé selon la revendication 3, **caractérisé en ce que** les systèmes réflecteurs (10) sont ajustés de manière à s'adapter à l'extension longitudinale des préformes (6, 7).

5. Dispositif pour le chauffage de préformes thermoplastiques de forme tubulaire pour la fabrication de corps creux (6, 7) formés par des récipients en PET ou des bouteilles en PET, sachant que le dispositif comporte une pluralité de systèmes de chauffage (5) positionnés essentiellement l'un sur l'autre, le long de laquelle les préformes (6, 7) à chauffer peuvent être déplacées en réalisant de manière simultanée un mouvement de rotation (9) autour d'un axe longitudinal (8) des préformes (6, 7), **caractérisé en ce que** des systèmes détecteurs (4) servant à identifier le contour extérieur d'une préforme (6, 7) à chauffer sont prévus, et **en ce que** les systèmes détecteurs (4) sont couplés ou peuvent être couplés aux systèmes de chauffage (5) servant à ajuster la position des systèmes de chauffage (5).

6. Dispositif selon la revendication 5, **caractérisé en ce que** les systèmes détecteurs sont formés par des éléments (4) réalisés à la manière d'étriers, lesquels peuvent être amenés en appui contre une préforme (6) pouvant être reçue dans un orifice de réception (3), et **en ce que** les éléments (4) réalisés à la manière d'étriers sont couplés aux systèmes de chauffage (5) par l'intermédiaire de systèmes de couplage mécaniques.

7. Dispositif selon la revendication 6, **caractérisé en ce que** les éléments (4) réalisés à la manière d'étriers peuvent être ajustés de manière automatique.

8. Dispositif selon l'une quelconque des revendications 5 à 7, **caractérisé en ce que** les systèmes de chauffage (5) peuvent être ajustés dans une position de repos dans des zones partielles du dispositif, dans lesquelles un déplacement des préformes à chauffer n'est pas prévu.

9. Dispositif selon l'une quelconque des revendications 5 à 8, **caractérisé en ce que** le dispositif est doté d'une manière connue en soi, à l'opposé des systèmes de chauffage (5) par rapport à la trajectoire de déplacement (2) des préformes (7), de systèmes réflecteurs (10).

10. Dispositif selon la revendication 9, **caractérisé en ce que** les systèmes réflecteurs (10) sont dotés dans la zone d'extrémité (11) des préformes (7) à chauffer, de zones partielles inclinées en direction des systèmes de chauffage (5).

11. Dispositif selon la revendication 9 ou 10, **caractérisé en ce que** les systèmes réflecteurs (10) peuvent être ajustés.

12. Dispositif selon la revendication 11, **caractérisé en ce que** les systèmes réflecteurs (10) peuvent être ajustés en hauteur le long de l'axe longitudinal (8) des préformes (7) à chauffer.

13. Dispositif selon l'une quelconque des revendications 5 à 12, **caractérisé en ce que** les systèmes de chauffage (5) peuvent être alimentés de manière séparée en énergie.
